# EUROPÄISCHE PATENTSCHRIFT

(11) **EP 2 750 266 B1**
(45) Veröffentlichungstag und Bekanntmachung des Hinweises auf die Patenterteilung: **20.10.2021**
(21) Anmeldenummer: 12199515.3
(22) Anmeldetag: 27.12.2012
(51) Int. Cl.: H02K 5/22, H02K 11/00

(54) **Pumpenaggregat**
Pump power unit
Groupe motopompe

(43) Veröffentlichungstag der Anmeldung: 02.07.2014
(73) Patentinhaber: Grundfos Holding A/S, 8850 Bjerringbro (DK)
(72) Erfinder: OLSEN, Michael Egelund, 8600 Silkeborg (DK); SCHULDT, Christian, 23858 Reinfeld (DE)
(74) Vertreter: Patentanwälte Vollmann Hemmer Lindfeld Partnerschaft mbB

(56) Entgegenhaltungen:
- EP-A1- 1 586 491
- EP-A1- 1 947 347
- EP-A1- 2 500 576
- EP-A2- 1 239 152
- DE-A1- 4 411 960
- DE-A1-102005 059 941
- DE-C1- 19 923 298
- US-B2- 7 059 872

## Beschreibung

Die Erfindung betrifft ein Pumpenaggregat mit den im Oberbegriff des Anspruchs 1 angegebenen Merkmalen.

Pumpenaggregate, wie beispielsweise Heizungsumwälzpumpenaggregate, bilden in der Regel eine Baueinheit aus einem elektrischen Antriebsmotor und einer Pumpe, beispielsweise einer Kreiselpumpe. Der elektrische Antriebsmotor ist in einem Motor- oder Statorgehäuse angeordnet, welches mit der eigentlichen Pumpe, d. h. einem Pumpengehäuse verbunden ist. Die zur Steuerung bzw. Regelung des elektrischen Antriebsmotors erforderlichen elektrischen und elektronischen Bauteile sind in der Regel in einem Klemmenkasten bzw. Elektronikgehäuse angeordnet, welches mit dem Statorgehäuse verbunden ist.

Sowohl zum Anschluss der Spulen im Statorgehäuse als auch zur Verbindung einer Netzanschlussleitung und ggf. zum Anschluss weiter elektronischer Bauteile ist es erforderlich, an dem Elektronikgehäuse Anschlusssteckkontakte oder Kabeldurchführungen auszubilden. Dazu ist es bekannt, elektrische Leiterbahnen in das Kunststoffmaterial, aus welchem das Elektronikgehäuse gefertigt ist, einzugießen, was jedoch den Gussvorgang des Elektronikgehäuses kompliziert macht. Alternativ ist es möglich, in dem Gehäuse Kabeldurchführungen vorzusehen, durch welche Kabel geführt und diese dann im Inneren mit einer Leiterplatte, an welcher die elektronischen Bauelemente angeordnet sind, zu verbinden. Dies wiederum erfordert eine aufwendige und fehleranfällige Montage. Darüber hinaus ist es problematisch, die Kabel in den Kabeldurchführungen abzudichten.

DE 44 11 960 A1 offenbart einen Elektromotor mit einem Gehäuse, in welchem eine Leiterplatte mit elektronischen Bauteilen angeordnet ist. Das Gehäuse ist rohrförmig ausgebildet und an einem Axialende durch einen Steckerdeckel geschlossen, in welchen ein Anschlussstecker derartig integriert ist, dass im Inneren eine Steckkupplung zur Kontaktierung der Leiterplatte und an der Außenseite eine Steckkupplung zum Anschluss eines Anschlusskabels ausgebildet ist. Der Steckerdeckel verschließt das Gehäuse und bildet somit einen Teil des Gehäuses.

EP1 947 347 A1 offenbart ein Umwälzpumpenaggregat mit einem Elektronikgehäuse, bei welchem elektrische Anschlusskontakte in die Gehäusewandung eingegossen sind. Eine entsprechende Ausgestaltung ist aus EP 2 500 576 A1 bekannt. DE 10 2005 059 941 A1 offenbart den Oberbegriff des Anspruchs 1.

Im Hinblick auf die vorgenannte Problematik ist es Aufgabe der Erfindung, ein Pumpenaggregat dahingehend zu verbessern, dass externe elektrische oder elektronische Bauteile auf vereinfachte Weise sicher mit einer Leiterplatte im Inneren eine Elektronikgehäuses des Pumpenaggregates verbunden werden können.

Diese Aufgabe wird durch ein Pumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Zeichnungen.

Das erfindungsgemäße Pumpenaggregat weist in bekannter Weise ein Motor- bzw. Statorgehäuse auf, in welchem der elektrische Antriebsmotor des Pumpenaggregates, d. h. insbesondere der Stator mit seinen Spulen und dem darin rotierenden Rotor angeordnet ist. Mit dem Statorgehäuse kann in bekannter Weise ein Pumpengehäuse verbunden sein, in welchem bevorzugt zumindest ein Laufrad angeordnet ist, welches durch den elektrischen Antriebsmotor drehend angetrieben wird. Die zur Steuerung bzw. Regelung des Antriebsmotors erforderlichen elektronischen Bauteile sind an zumindest einer Leiterplatte angeordnet, welche in einem Klemmenkasten, bzw. Elektronikgehäuse angeordnet ist. Dieses Elektronikgehäuse ist mit dem Statorgehäuse verbunden. Dabei kann es axial- oder radialseitig an das Statorgehäuse angesetzt sein.

Erfindungsgemäß ist in oder an dem Elektronikgehäuse zumindest ein separates Anschlusselement angeordnet. Dieses Anschlusselement dient dazu, die Leiterplatte elektrisch mit außerhalb des Elektronikgehäuses gelegenen Bauteilen zu verbinden, beispielsweise den Spulen im Statorgehäuse oder einer Netzanschlussleitung. Das separate Anschlusselement ist als Kunststoffformteil ausgebildet und mit der übrigen Struktur des Elektronikgehäuses vorzugsweise kraft- und/oder formschlüssig, ggf. durch zusätzliche Befestigungselemente wie Schrauben verbunden. D. h. das Anschlusselement ist ein von dem Elektronikgehäuse unabhängiges Bauteil. Das Anschlusselement weist einen ersten elektrischen Steckverbinder auf, welcher mit einer korrespondierenden Stecckupplung an der Leiterplatte verbunden ist. Dieser Steckverbinder und die Steckkupplung sind so ausgebildet, dass sie vorzugsweise lösbar zusammengesteckt werden können und durch das Zusammenstecken einen elektrischen Kontakt herstellen. Ferner weist das Anschlusselement einen zweiten elektrischen Steckverbinder auf, welcher mit dem ersten elektrischen Steckverbinder über Leiterbahnen verbunden ist. Diese Leiterbahnen sind besonders bevorzugt in den Kunststoff des Anschlusselementes eingegossen. Der zweite Steckverbinder dient dazu, einen elektrischen Anschluss zu einem außerhalb des Elektronikgehäuses gelegenen Bauteil herzustellen. Das Anschlusselement weist eine eigenstabile Struktur auf und hat daher im Unterschied zu einem Kabel eine definierte Form und Lage.

Durch das zusätzliche Anschlusselement ist es nicht mehr erforderlich, Leiterbahnen in das Elektronikgehäuse bzw. dessen Wandungen selber einzugießen. Erfindungsgemäß ist das Elektronikgehäuse bevorzugt frei von solchen integrierten Leitern. Dennoch ist eine einfache Anbindung außerhalb des Elektronikgehäuses gelegener Bauteile durch reine Steckverbindungen möglich, wodurch eine einfache Montage realisiert wird. Gleichzeitig ist es nicht erforderlich, die externen Bauteile, wie beispielsweise eine Netzanschlussleitung direkt mit Steckkontakten an der Leiterplatte zu verbinden. Dies hat zum einen den Vorteil, dass die Leiterplatte nicht unbedingt so platziert werden muss, dass sie von der Außenseite des Elektronikgehäuses her kontaktierbar ist. So ergeben sich mehr Freiheiten bei der Gestaltung des Elektronikgehäuses und der Anordnung der Leiterplatte in dessen Inneren. Zum anderen ist von Vorteil, dass beim Anschluss externer Bauteile eben nicht Steckkontakte an der Leiterplatte kontaktiert werden müssen, sodass eine Beschädigung der Leiterplatte bei unsachgemäßer Handhabung verhindert wird. Darüber hinaus ist eine bessere Abdichtung des Elektronikgehäuses nach außen möglich, da eine solche gegenüber dem formstabilen zusätzlichen Anschlusselement vorgenommen werden kann, welches als Kunststoffformteil so ausgebildet sein kann, dass es gut abgedichtet durch eine Öffnung in der Wandung des Elektronikgehäuses hindurchgeführt oder an einer solchen Öffnung abgedichtet platziert werden kann.

Es ist zu verstehen, dass der erste und der zweite Steckverbinder als männlicher oder weiblicher Teil einer Steckkupplung ausgebildet werden können. Entsprechend wird die Steckkupplung an der Leiterplatte korrespondierend als weiblicher oder männlicher Teil einer Steckkupplung ausgebildet.

Das Anschlusselement ist als ein Netz-Anschlusselement ausgebildet, d. h. es dient dem Netzanschluss der elektronischen bzw. elektrischen Komponenten im Inneren des Elektronikgehäuses und somit vorzugsweise der Stromversorgung des gesamten Pumpenaggregates. Dieses Netz-Anschlusselement weist einen ersten elektrischen Steckverbinder auf, welcher mit einer korrespondierenden Steckkupplung an der Leiterplatte elektrisch leitend in Eingriff ist, sowie einen zweiten elektrischen Steckverbinder, welcher über elektrische Leiterbahnen in dem Netz-Anschlusselement mit dem ersten Steckverbinder verbunden ist und zum Anschluss einer Netzanschlussleitung vorgesehen ist. So kann der zweite Steckverbinder beispielsweise als Steckkupplung ausgebildet sein, in welche ein Anschlussstecker einer Netzanschlussleitung eingesteckt werden kann. Je nach Ausgestaltung des zweiten elektrischen Steckverbinders kann der Anschlussstecker als männlicher oder weiblicher Teil der Steckverbindung ausgebildet sein. So ist ein einfacher Netzanschluss des Pumpenaggregates ohne ein aufwendiges Anschrauben oder Anklemmen einzelner Leiter möglich.

Das Anschlusselement ist außerhalb des Innenraumes des Elektronikgehäuses angeordnet. Dies hat den Vorteil, dass der zweite elektrische Steckverbinder somit außerhalb des Elektronikgehäuses gelegen sein kann und dort zum Anschluss einer Netzanschlussleitung leicht kontaktiert werden kann. Das erste elektrische Steckelement greift bei dieser Anordnung in das Innere des Elektronikgehäuses ein und kontaktiert die Steckkupplung an der Leiterplatte.

Der Innenraum des Elektronikgehäuses ist durch eine Wandung begrenzt, in welcher eine Öffnung ausgebildet ist, durch welche sich das Anschlusselement mit seinem ersten Steckverbinder in den Innenraum hinein erstreckt. So kann das erste Anschlusselement außen an dem Elektronikgehäuse angeordnet werden und durch die Öffnung hindurch sich in das Innere des Elektronikgehäuses hinein erstrecken und dort mit dem ersten Steckverbinder die Leiterplatte kontaktieren.

Die Anordnung des Anschlusselementes an der Außenseite hat dabei den Vorteil, dass der erforderliche Durchgang in der Wandung des Elektronikgehäuses so sehr einfach abgedichtet werden kann. Darüber hinaus ist die Montage begünstigt, da die Leiterplatte in das Innere des Elektronikgehäuses eingesetzt werden kann das Anschlusselement dann von einer entgegengesetzten Außenseite her angesetzt und durch die Öffnung mit der Leiterplatte kontaktiert werden kann. Dies begünstigt sehr einfach Fügevorgänge.

Der zweite Steckverbinder ist außerhalb des Innenraumes angeordnet. Dies hat den Vorteil, dass beim Anschluss externer Bauelemente, wie beispielsweise einer Netzanschlussleitung überhaupt nicht in den Innenraum des Elektronikgehäuses eingegriffen werden muss, sondern dieser dicht verschlossen bleiben kann. So wird eine Störung der Abdichtung und die Gefahr der unbeabsichtigten Beschädigung elektronischer Bauteile im Inneren des Elektronikgehäuses verhindert.

Zweckmäßigerweise ist eine Dichtung vorgesehen, welche an der die Öffnung umgebenden Wandung sowie an dem Anschlusselement dichtend anliegt und vorzugsweise an die Wandung oder das Anschlusselement angegossen ist. So wird eine Abdichtung der Öffnung zwischen dem Anschlusselement und der Wandung des Elektronikgehäuses hergestellt. Das Angießen der Dichtung kann bevorzugt im Zweikomponentenspritzguss erfolgen, wobei die Dichtung dann bevorzugt gleichzeitig mit weiteren erforderlichen Dichtungen, beispielsweise einer Dichtung zum Abdichten eines an das Elektronikgehäuses angesetzten Deckels erfolgen kann.

Gemäß einer bevorzugten Ausführungsform sind der erste und der zweite Steckverbinder gewinkelt zueinander, vorzugsweise in einem Winkel von 90° zueinander angeordnet. Auf diese Weise kann das Anschlusselement eine weitere Funktion nach Art eines Adapters übernehmen. So hat das Anschlusselement den Vorteil, dass die Steckrichtung zum Anschluss eines externen Bauteiles, wie einer Netzanschlussleitung, nicht durch die Anordnung der Leiterplatte und der dort platzierten Stecckupplung vorgegeben ist, sondern mit Hilfe des Anschlusselementes in eine andere Richtung gerichtet werden kann, sodass der zweite Steckverbinder so platziert werden kann, dass er beispielsweise von außen gut zugänglich ist, um eine Netzanschlussleitung anstecken zu können.

Die Leiterplatte erstreckt sich im Innenraum des Elektronikgehäuses, vorzugsweise parallel zu einem Boden des Elektronikgehäuses, und der zweite Steckverbinder ist zu einer sich quer zum Boden erstreckenden Seitenwandung des Elektronikgehäuses hin gerichtet. Besonders bevorzugt erstreckt die Seitenwandung sich normal zu dem Boden.

Die Anordnung der zwei Steckverbinder an dem Anschlusselement im Winkel von 90° zueinander hat beispielsweise den Vorteil, dass die Leiterplatte parallel zu dem Boden des Elektronikgehäuses ausgerichtet werden kann, wobei der Boden vorzugsweise dasjenige Teil des Elektronikgehäuses ist, welches an das Statorgehäuse angrenzt. Die Stecckupplung kann dann so gerichtet sein, dass sie sich normal zu der Oberfläche der Leiterplatte erstreckt, d. h. dass deren Steckrichtung normal zur Leiterplatte gerichtet ist. Durch die Anordnung der Steckverbinder an dem Anschlusselement im Winkel von 90° kann dann erreicht werden, dass der zweite Steckverbinder zu der quer zu dem Boden des Elektronikgehäuses ausgerichteten Seitenwandung gerichtet ist, d. h. beispielsweise eine elektrische Netzanschlussleitung so von der Seite an das Elektronikgehäuse angesteckt werden kann. Die Fügerichtung beim Einstecken der Netzanschlussleitung ist dann parallel zu der Leiterplatte.

Gemäß einer besonderen Ausführungsform ist das Anschlusselement an einer Ecke des Elektronikgehäuses angeordnet. An der Ecke wird eine gute Zugänglichkeit des zweiten Steckverbinders von außen ermöglicht. Gemäß einer weiteren bevorzugten Ausführungsform weist das Elektronikgehäuse an einer Wandung, d. h. einer Außenwandung, eine nach innen in den Innenraum hinein gerichtete Einbuchtung auf, in der das Anschlusselement angeordnet ist. D. h. die Wandung weist eine Stufe auf bzw. springt zum Innenraum hin zurück. So wird an der Wandung an der Außenseite eine nach innen gerichtete Einbuchtung geschaffen, welche einen Raum zur Aufnahme des Anschlusselementes bildet. So kann das Anschlusselement an der Außenseite des Elektronikgehäuses platziert werden, dennoch aber zumindest teilweise innerhalb der Gesamt-Außenkontur des Elektronikgehäuses gelegen sein. Idealerweise steht das Anschlusselement nicht über die Außenkontur des Elektronikgehäuses vor, sondern liegt vollständig in dem von der Einbuchtung gebildeten Raum. So beeinträchtigt das Anschlusselement nicht die Gestaltung der Außenkontur des Elektronikgehäuses, sondern kann sich harmonisch in diese einfügen.

Weiter bevorzugt ist die Einbuchtung an zumindest einer, der den Innenraum begrenzenden Wandung abgewandten Seite von einer Wand begrenzt, wobei die Wand vorzugsweise eine Verlängerung einer Außenwandung des Elektronikgehäuses bildet. So ist das Anschlusselement, wenn es in die Einbuchtung eingesetzt ist, am Außenumfang zumindest teilweise von einer Verlängerung der Außenwandung des Elektronikgehäuses überdeckt, sodass es an der Seite der Außenwandung nach außen im Wesentlichen nicht in Erscheinung tritt. So fügt sich das Anschlusselement noch besser in die Außenkontur bzw. Außengestaltung des Elektronikgehäuses ein.

Gemäß einer besonderen Ausführungsform der Erfindung weist das Anschlusselement zumindest eine Außenfläche auf, welche sich in eine Außenwandung des Elektronikgehäuses flächig einfügt oder an eine Außenwandung des Elektronikgehäuses flächig anschließt, wobei vorzugsweise das Anschlusselement eine Farbe aufweist, welche von der Farbe der Außenwandung verschieden ist. So kann mit Hilfe des Anschlusselementes in der Außenwandung des Elektronikgehäuses ein Flächenbereich durch die Außenfläche des Anschlusselementes geschaffen werden, welcher andersfarbig hervorgehoben ist. Dies kann beispielsweise für die Beschriftung des Elektronikgehäuses von Vorteil sein, wenn das Elektronikgehäuse selber eine Farbe aufweist, auf welcher sich die Beschriftung schlecht abhebt. Dann kann die Beschriftung an dieser Außenfläche des Anschlusselementes, welches andersfarbig ausgebildet ist, angebracht werden. So kann auf die Anbringung eines zusätzlichen Etikettes oder Beschriftungsfeldes verzichtet werden, ein solches wird durch das Anschlusselement geschaffen.

Vorzugsweise ist in der Wand, welche die Einbuchtung begrenzt, eine Öffnung ausgebildet, in welcher die Außenfläche des Anschlusselementes gelegen ist. Dabei liegt die Außenfläche des Anschlusselementes vorzugsweise so in der Wand, dass sie sich zur Außenseite der Wand, d. h. der der Einbuchtung abgewandten Seite der Wand bündig in die Wand einfügt. Die Einbuchtung ist weiter bevorzugt an dem Elektronikgehäuse so ausgebildet, dass sich die Wand, welche die Einbuchtung begrenzt, quer, weiter bevorzugt normal zu einem Boden der Einbuchtung erstreckt. Dem Boden gegenüberliegend ist die Einbuchtung geöffnet, so dass von dieser Seite her das Anschlusselement in die Einbuchtung eingesetzt werden kann. Der Boden der Einbuchtung entspricht weiter bevorzugt dem oben beschriebenen Boden des Elektronikgehäuses. So kann die Wand, welche die Einbuchtung begrenzt, Teil einer Seitenwandung des Elektronikgehäuses sein bzw. eine Verlängerung der Seitenwandung darstellen, welche sich quer, weiter bevorzugt normal zu dem Boden des Elektronikgehäuses erstreckt.

Das Anschlusselement ist vorzugsweise mit einer Rast- und/oder Schraubverbindung mit dem Elektronikgehäuse verbunden. So kann das Anschlusselement lösbar mit dem Elektronikgehäuse verbunden werden. Besonders bevorzugt ist eine Klemm- oder Rastverbindung, sodass das Anschlusselement durch reine Steckverbindung mit dem Elektronikgehäuse verbunden werden kann, wodurch sich die Montage vereinfacht.

Gemäß einer weiteren bevorzugten Ausführungsform der Erfindung kann an oder in dem Elektronikgehäuse ein separates, als Kunststoffformteil ausgebildetes, Stator-Anschlusselement angeordnet sein, welches vorzugsweise mit einem ersten elektrischen Steckverbinder elektrisch leitend mit der Leiterplatte verbunden ist und einen zweiten elektrischen Steckverbinder aufweist, welcher mit einem elektrischen Anschlussstecker eines Stators des elektrischen Antriebsmotors verbunden ist. D. h. dieses separate Stator-Anschlusselement ist im Sinne eines Anschlusselementes gemäß der vorangehenden Beschreibung als separates Bauteil ausgebildet, d. h. es ist nicht integraler Bestandteil der Struktur des Elektronikgehäuses, insbesondere nicht einteilig oder einstückig mit einer Wandung des Elektronikgehäuses gefertigt. Vielmehr ist das Anschlusselement ein Einzelteil, welche mit dem übrigen Elektronikgehäuse in geeigneter Weise verbunden wird. Das Stator-Anschlusselement dient der elektrischen Verbindung der Statorspulen mit der Elektronik an der Leiterplatte. Dazu ist das Anschlusselement in geeigneter Weise über eine erste elektrische Verbindung mit der Leiterplatte verbunden. Insbesondere kann diese erste elektrische Verbindung durch einen ersten Steckverbinder realisiert werden, welcher in eine korrespondierende Steckkupplung an der Leiterplatte eingreift. Alternativ ist jedoch auch eine andere Kontaktierung, beispielsweise über eine Lötverbindung, denkbar. Das Stator-Anschlusselement weist eine zweite elektrische Steckverbindung auf, welche mit einem elektrischen Anschlussstecker eines Stators des elektrischen Antriebsmotors verbunden ist. Dieser Anschlussstecker liegt vorzugsweise im Inneren des Statorgehäuses. Er kann sich jedoch auch aus dem Statorgehäuse hinaus durch eine Öffnung in das Innere des Elektronikgehäuses hinein erstrecken. Wenn er im Inneren des Statorgehäuses gelegen ist, erstreckt sich vorzugsweise der zweite elektrischer Steckverbinder bzw. ein Teil des Stator-Anschlusselementes durch eine Öffnung in der Wandung des Elektronikgehäuses aus diesem heraus in das Innere des Statorgehäuses hinein, um dort den elektrischen Anschlussstecker zu kontaktieren.

Der erste und der zweite Steckverbinder an dem Stator-Anschlusselement können als weiblicher oder männlicher Teil einer Steckverbindung ausgebildet sein. Entsprechend werden der Anschlussstecker und die Steckkupplung an der Leiterplatte als männlicher oder weiblicher Teil der Steckverbindung korrespondierend ausgebildet.

Der zweite elektrische Steckverbinder des Stator-Anschlusselementes ist mit den elektrischen Verbindungselementen zur Verbindung mit der Leiterplatte, insbesondere einem ersten elektrischen Steckverbinder über Leiterbahnen verbunden, welche an oder in dem Stator-Anschlusselement angeordnet sind. Vorzugsweise sind diese Leiterbahnen in das Innere des Stator-Anschlusselementes eingegossen. Die Verwendung des Stator-Anschlusselementes hat den Vorteil, dass auf einfache Weise, insbesondere allein durch Steckverbindungen, eine Kontaktierung der Leiterplatte mit dem Stator im Inneren des Statorgehäuses möglich ist. Dabei ermöglicht das Stator-Anschlusselement jedoch eine von der Kontaktierung im Wesentlichen unabhängige Anordnung der Leiterplatte in dem Elektronikgehäuse, da die Leiterplatte nicht so angeordnet werden muss, dass sie direkt mit einem Anschlussstecker oder Anschlusselement des Stators in Kontakt tritt. Ferner kann auf eine Kabelverbindung verzichtet werden. Das Stator-Anschlusselement stellt vielmehr, wie das vorangehend beschriebene Anschlusselement, ein eigenstabiles, vorzugsweise starres Kunststoffbauteil dar, welches eine feste definierte elektrische Verbindung herstellt, wie sie sonst von in die Wandung des Elektronikgehäuses eingegossenen Leiterbahnen gebildet wird. Allerdings kann auf den aufwendigen Gießprozess des Elektronikgehäuses mit eingegossenen Leiterbahnen verzichtet werden.

Der erste elektrische Steckverbinder an dem Stator-Anschlusselement ist vorzugsweise entgegengesetzt zu dem zweiten elektrischen Steckverbinder gerichtet. D. h. an einer Seite wird das Stator-Anschlusselement über den ersten elektrischen Steckverbinder oder alternativ eine andere elektrische Verbindung mit der Leiterplatte kontaktiert, während an der entgegengesetzten Seite der zweite elektrische Steckverbinder zur Verbindung mit dem Stator gelegen ist. Bei Verwendung zweier Steckverbinder sind deren Steckrichtungen vorzugsweise parallel zueinander gerichtet, aber entgegengesetzt.

Besonders bevorzugt sind der erste Steckverbinder und der zweite Steckverbinder in einer Richtung quer zu ihren Steckrichtungen versetzt zueinander angeordnet, während die Steckrichtungen vorzugsweise parallel zueinander gerichtet sind. Dies ermöglicht es, dass die Statorspulen an einer Position durch das Stator-Anschlusselement kontaktiert werden, welche nicht von der Leiterplatte überdeckt ist. So muss die Leiterplatte nicht so angeordnet werden, dass sie den elektrischen Anschlüssen der Statorspulen gegenüberliegt. Vielmehr kann das Stator-Anschlusselement hier eine Verbindung herstellen, welche eine versetzte Anordnung ermöglicht. Anstatt eines ersten Steckverbinders kann auch bei dieser Ausführungsform eine andere geeignete elektrische Verbindung gewählt sein, beispielsweise können an dem Stator-Anschlusselement erste elektrische Verbindungselemente ausgebildet sein, welche zum Verlöten mit korrespondierenden Anschlüssen an der Leiterplatte vorgesehen sind.

Das Stator-Anschlusselement ist besonders bevorzugt im Inneren des Elektronikgehäuses angeordnet, wobei sich vorzugsweise der zweite Steckverbinder durch eine Öffnung in einem Boden des Elektronikgehäuses hindurch zu dem Stator erstreckt. Der Boden des Elektronikgehäuses ist dabei, wie oben beschrieben, vorzugsweise die Seite des Elektronikgehäuses, welche dem Stator zugewandt ist. Die Öffnung wird weiter bevorzugt in geeigneter Weise gedichtet. Dies kann beispielsweise dadurch geschehen, dass der Boden gegenüber einer Außenwandung des Statorgehäuses abgedichtet wird. Alternativ kann auch das Stator-Anschlusselement gegenüber einer die Öffnung umgebenden Wandung abgedichtet sein.

Besonders bevorzugt ist das Elektronikgehäuse am Axialende des Statorgehäuses des elektrischen Antriebsmotors angeordnet, wobei das Elektronikgehäuse bzw. der Klemmenkasten einen radial über den Außenumfang des Statorgehäuses auskragenden Abschnitt aufweist, an welchem das Anschlusselement angeordnet ist. Bei diesem Anschlusselement handelt es sich dann bevorzugt um das oben beschriebene Netz-Anschlusselement oder ein anderes Anschlusselement, welches zur Kontaktierung externer elektrischer Bauelemente bzw. -geräte vorgesehen ist. Die Anordnung in dem über die Grundform des Statorgehäuses auskragenden Abschnitt des Elektronikgehäuses hat den Vorteil, dass hier der zweite Steckverbinder des Anschlusselementes so angeordnet werden kann, dass er von außen gut zugänglich ist. So kann beispielsweise eine Netz-Anschlussleitung in diesen Bereich von außen an das Elektronikgehäuse bzw. das dort angeordnete Anschlusselement angesteckt werden.

Nachfolgend wird die Erfindung beispielhaft anhand der beigefügten Figuren beschrieben. In diesen zeigt:
- Fig. 1: eine Seitenansicht eines erfindungsgemäßen Pumpenaggregates,
- Fig. 2: eine um 90° gedrehte Seitenansicht des Pumpenaggregates gemäß Fig. 1,
- Fig. 3: eine Draufsicht auf das Pumpenaggregat gemäß Figuren 1 und 2,
- Fig. 4: das Elektronikgehäuse des Pumpenaggregates gemäß Figuren 1 - 3 in teilweise explodierter Darstellung,
- Fig. 5: das Elektronikgehäuse gemäß Fig. 4 im geöffneten Zustand,
- Fig. 6: vergrößert den Ausschnitt VI aus Fig. 5,
- Fig. 7: vergrößert den Ausschnitt VII aus Fig. 5,
- Fig. 8: das geöffnete Elektronikgehäuse gemäß Figuren 4 - 7 mit entnommener Leiterplatte,
- Fig. 9: das Elektronikgehäuse gemäß Fig. 8 in explodierter Darstellung,
- Fig. 10: das Elektronikgehäuse gemäß Fig. 5 in explodierter Darstellung,
- Fig. 11: eine Ansicht des Elektronikgehäuses gemäß Fig. 4 - 10 von der Unterseite,
- Fig. 12: eine Schnittansicht des Pumpenaggregates gemäß Figuren 13,
- Fig. 13: eine Explosionsansicht des Pumpenaggregates gemäß Fig. 12,

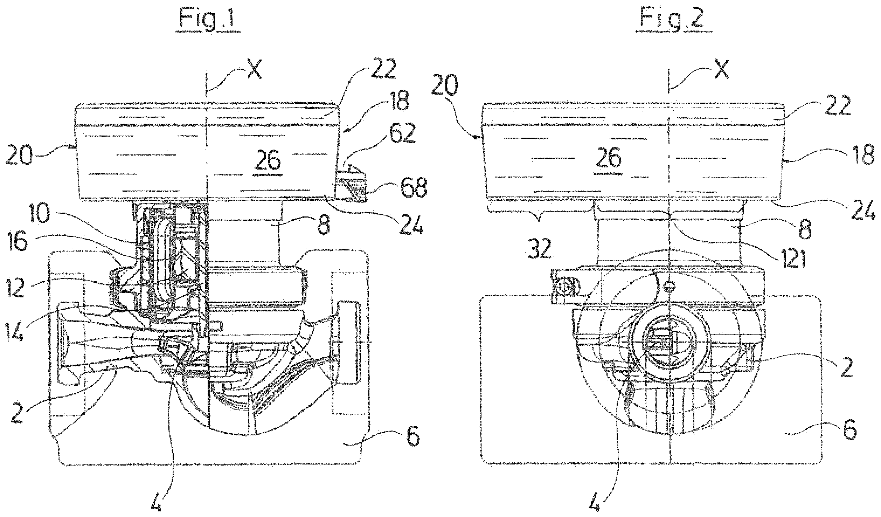

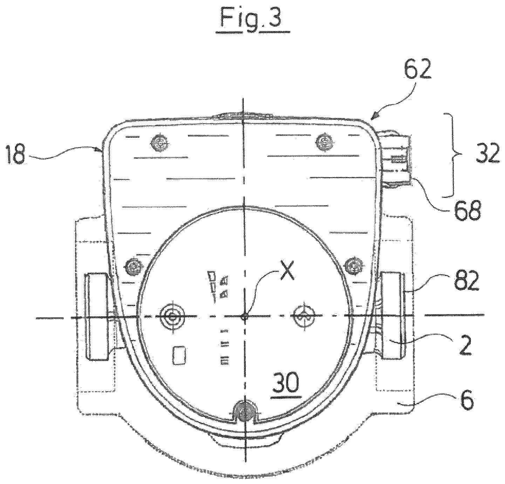

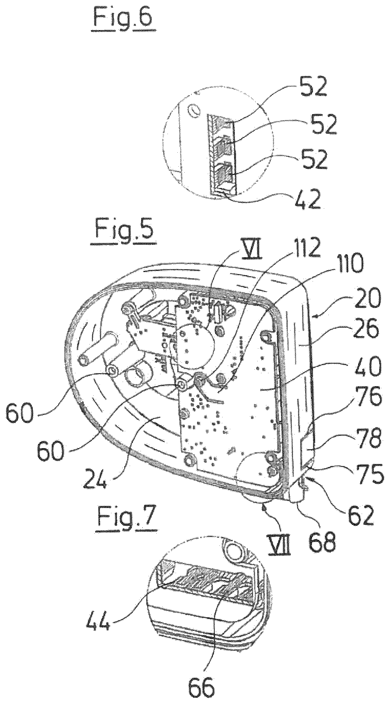

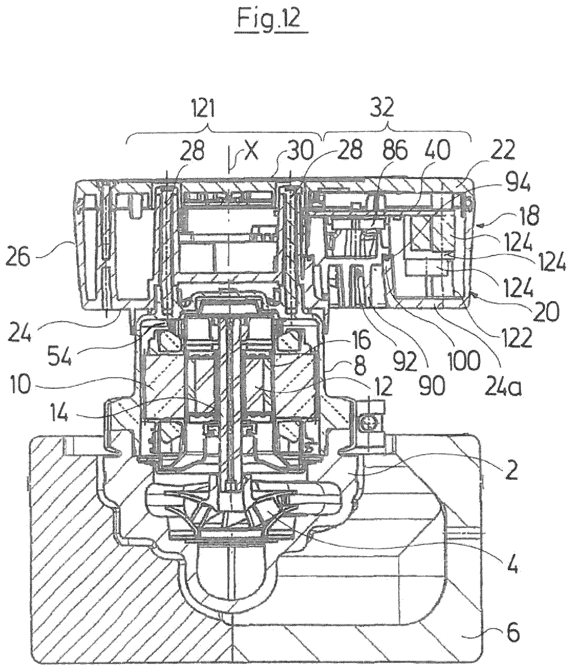

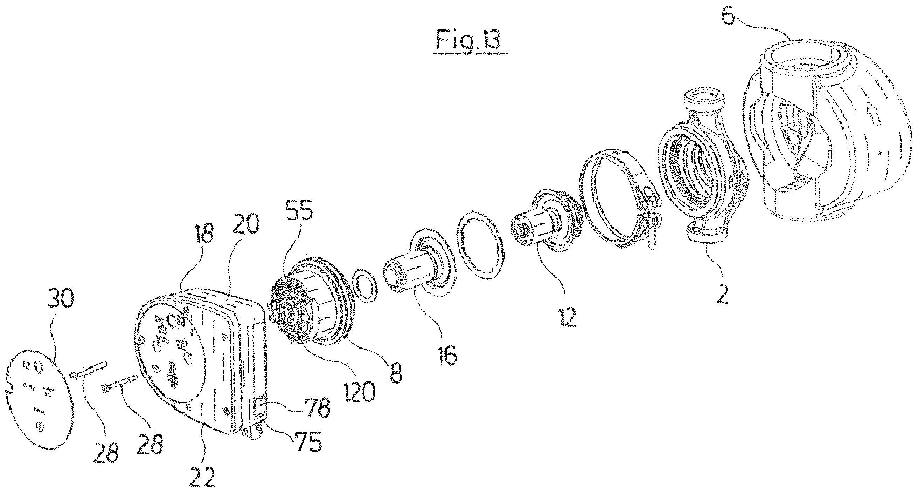

Eine erste bevorzugte Ausführungsform der Erfindung wird anhand der Figuren 1 - 13 beschrieben. Dabei zeigen die Figuren 1 - 3, 12 und 13 das Pumpenaggregat gemäß dieser bevorzugten Ausführungsform in einer Gesamtansicht. Das Pumpenaggregat weist in bekannter Weise ein Pumpengehäuse 2 auf, in welchem ein Laufrad 4 angeordnet ist. Das Pumpenaggregat ist somit als Kreiselpumpenaggregat ausgebildet. In dem hier gezeigten Beispiel ist das Pumpengehäuse 2 von einem Isolationselement 6 umgeben. Das Pumpengehäuse 2 ist mit einem Motor- bzw. Statorgehäuse 8 verbunden, welches sich in axialer Richtung in Richtung der Längs- bzw. Drehachse X an das Pumpengehäuse 2 anschließt. In dem Statorgehäuse 8 ist der elektrische Antriebsmotor angeordnet, welcher insbesondere einen Stator 10 und einen in diesem drehbaren Rotor 12 aufweist. Der Rotor 12 ist vorzugsweise als permanentmagnetischer Rotor ausbildet. Der Rotor 12 ist über die Rotorwelle 14 drehfest mit dem Laufrad 4 verbunden. Der elektrische Antriebsmotor ist als nasslaufender elektrischer Antriebsmotor ausgebildet, d. h. er weist ein Spaltrohr 16 auf.

An das dem Pumpengehäuse 2 abgewandte Axialende (in Richtung der Längsachse X gesehen), des Statorgehäuses 8 ist an das Statorgehäuse 8 ein Klemmenkasten bzw. Elektronikgehäuse 18 angeordnet. Das Elektronikgehäuse 18 ist als Formteil aus Kunststoff ausgebildet, wobei es zweiteilig ausgebildet ist und ein Unterteil 20 und einen auf das Unterteil 20 aufgesetzten Deckel 22 aufweist. Das Unterteil 20 ist im Wesentlichen topfförmig ausgebildet und weist einen Boden 24 auf, welcher dem Statorgehäuse 8 zugewandt ist. Ausgehend von dem Boden 24 erstreckt sich an dessen Außenumfang eine Außenwandung 26 in axialer Richtung in dem Statorgehäuse 8 abgewandter Richtung. Dabei erstreckt sich die Außenwandung 26 im Wesentlichen in Richtung der Längsachse X. An dem offenen, vom Boden 24 beabstandeten Ende der Außenwandung 26 ist der Deckel 22 zum Verschluss des Elektronikgehäuses angesetzt. Der Boden 24 des Elektronikgehäuses ist mit dem Statorgehäuse 8 über zwei Schrauben 28 verschraubt. An der Außenseite des Deckels 22 ist ein Bedienfeld 30 mit Bedien- und Anzeigeelementen ausgebildet.

Das Elektronikgehäuse 18 weist quer zur Längsachse X ist eine größere Ausdehnung auf als die radiale Ausdehnung des Statorgehäuses 8. So weist das Elektronikgehäuse 18 einen radial bzw. seitlich über den Außenumfang des Statorgehäuses 8 auskragenden Abschnitt 32 auf. Auch in den anderen Richtungen steht das Elektronikgehäuse 18 geringfügig allerdings konzentrisch zur Längsachse X über den Außenumfang des Statorgehäuses 8 in radialer Richtung vor. Zu einer Seite hin steht es jedoch in Form des auskragenden Abschnittes 32 weiter vor.

Dieser Bereich ist auch in tangentialer Richtung ausgehend von dem Bereich am Axialende des Statorgehäuses 8 verbreitert.

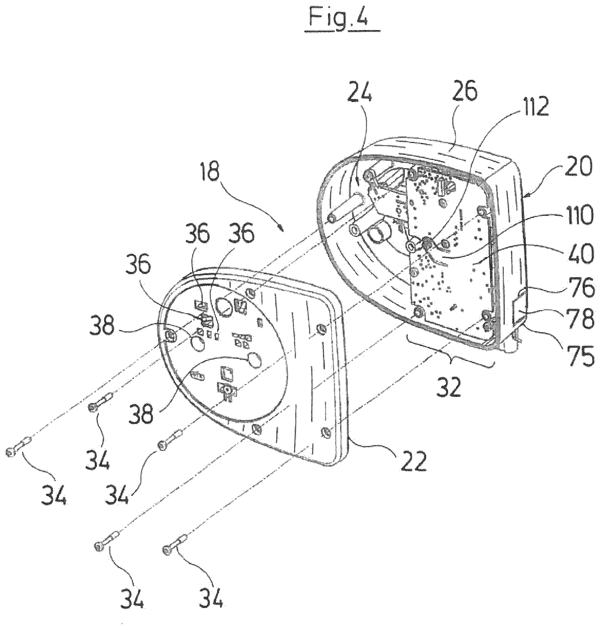

Der Aufbau des Elektronikgehäuses 18 wird nachfolgend näher erläutert. Der Deckel 22 ist, wie in Fig. 4 gezeigt, mittels Schrauben 34 mit dem Unterteil 20 verschraubt. In der Darstellung in Fig. 4 ist die das Bedienfeld 30 bildende Folie vom Deckel abgenommen. Zu erkennen sind lediglich Durchbrechungen 36 in dem Deckel 22, welche den Zugang zu Bedien- und Anzeigeelementen ermöglichen, welche an der Unterseite des Deckels, welche dem Unterteil 2 zugewandt ist, angeordnet sind. Diese Durchbrechungen 36 werden durch die Folie des Bedienfeldes 30 überdeckt und verschlossen. Dabei verdeckt die Folie des Bedienfeldes 30 auch die Löcher 38, durch welche die Schrauben 28 zur Befestigung des Unterteils 20 an dem Statorgehäuse 8 geführt sind.

Im Inneren des Elektronikgehäuses 18, d. h. in dem von der Umfangs- bzw. Außenwandung 26 und dem Boden 24 aufgespannten Innenraum, welcher durch den Deckel 22 verschlossen wird, ist als wesentliches Element eine Leiterplatte 40 angeordnet. An der Leiterplatte 40 sind in bekannter Wiese Leiterbahnen ausgebildet und elektrische und elektronische Bauteile zur Steuerung bzw. Regelung des elektrischen Antriebsmotors in dem Statorgehäuse 8 angebracht. Insbesondere kann auf der Leiterplatte ein Frequenzumrichter ausgebildet sein.

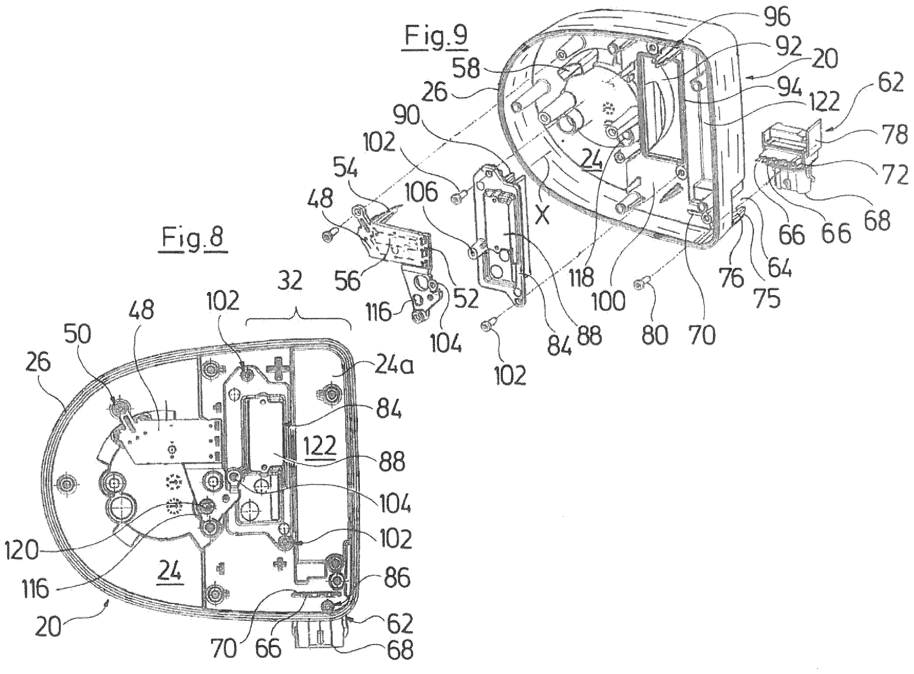

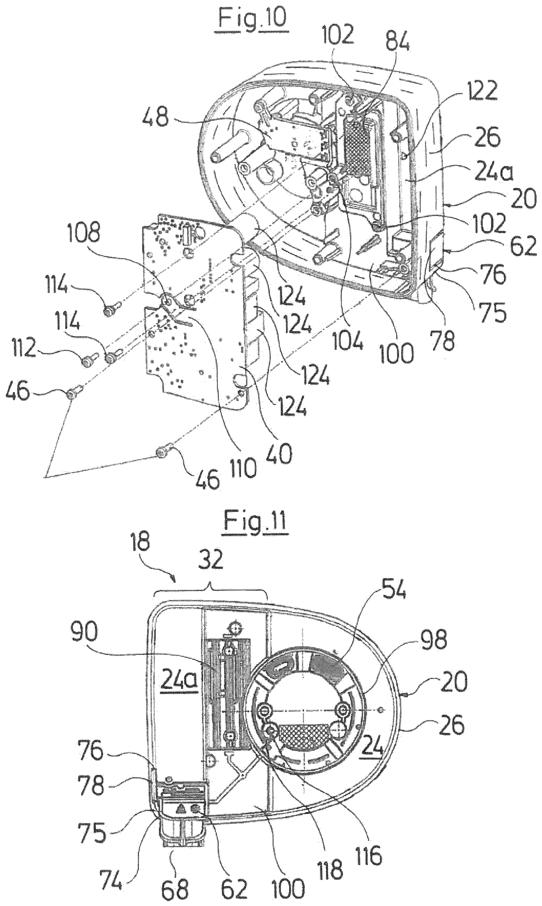

An der Leiterplatte 40 sind zwei Steckkupplungen, eine erste Steckkupplung 42 und eine zweite Steckkupplung 44 ausgebildet. Die erste und zweite Steckkupplung 42 und 44 dienen zur Verbindung mit Anschlusselementen zur Verbindung mit externen Bauteilen, wie es anhand der Figuren 8 und 9 näher erläutert wird. In der Darstellung gemäß Figuren 8 und 9 ist, wie in Fig. 10 gezeigt, die Leiterplatte 40 aus dem Elektronikgehäuse 18 entnommen. Die Leiterplatte 40 ist mit Schrauben 46 in dem Unterteil 20 des Elektronikgehäuses 18 befestigt. Ein erstes Anschlusselement, welches ein Stator-Anschlusselement 48 bildet, dient der elektrischen Verbindung des Stators 10 mit den elektronischen und elektrischen Bauteilen an der Leiterplatte 40. D. h. hier bildet der Stator 10 das externe Bauteil. Das Stator-Anschlusselement 48 ist als separates Bauteil ausgebildet, welches mittels einer Schraube 50 und einer der Schrauben 46, welche die Leiterplatte 40 im Unterteil 20 fixieren, an dem Unterteil 20 des Elektronikgehäuses 8 angeschraubt ist. Das Unterteil 20 ist als reines Kunststoffgehäuse ausgebildet und weist keine fest angeordneten elektrischen Leiter oder Leiterbahnen in seinem Inneren, insbesondere keine in das Kunststoffmaterial eingegossenen Leiterbahnen auf. Solche werden durch Leiterbahnen ersetzt, welche in dem Stator-Anschlusselement 48 ausgebildet sind. Das Stator-Anschlusselement 48 ist als eigenstabiles Formteil aus Kunststoff ausgebildet und weist einen ersten Steckverbinder 52 und einen zweiten Steckverbinder 54 auf. Das Stator-Anschlusselement 48 weist einen flachen Mittelbereich auf, welcher sich parallel zum Boden 24 und zu der Leiterplatte 40 im Inneren des Elektronikgehäuses 18 erstreckt. An entgegengesetzten Enden dieses Mittelbereichs, d. h. in einer Richtung quer zur Längsachse X, sind der erste Steckverbinder 52 und der zweite Steckverbinder 54 voneinander beabstandet angeordnet. Ferner sind der erste Steckverbinder 52 und der zweite Steckverbinder 54 in Richtung der Längsachse X in entgegengesetzte Richtungen gerichtet. D. h. die Steckrichtungen, in welchen die Steckverbinder 52 und 54 kontaktiert werden, sind im Wesentlichen parallel aber entgegengesetzt zueinander gerichtet. In dem hier gezeigten Beispiel sind die Steckverbinder 52 und 54 dreipolig ausgebildet und im Inneren des Stator-Anschlusselementes 48 über Leiterbahnen 56, welche in Fig. 9 gestrichelt dargestellt sind, miteinander verbunden. Die Leiterbahnen 56 sind in das Kunststoffmaterial eingegossen, sodass diese die Leiterbahnen 56 gleichzeitig elektrisch isoliert. Der zweite Steckverbinder 54 erstreckt sich durch eine Öffnung 58 im Boden 24 des Unterteils 20 des Klemmenkastens 18 aus dem Innenraum des Elektronikgehäuses 18 heraus und greift durch eine Öffnung 55 axialseitig in das Innere des Statorgehäuses ein und tritt dort mit Anschlusskontakten bzw. einem Anschlussstecker zur Kontaktierung der Spulen im Stator 10 in Kontakt. Der erste Steckkontakt 52 tritt mit der ersten Steckkupplung 42 an der Leiterplatte 40 elektrisch leitend in Eingriff.

Wie zu erkennen ist, ermöglicht es das Stator-Anschlusselement 48, dass die Leiterplatte 40 nicht oberhalb der Öffnung 58 gelegen sein muss, sondern seitlich in Richtung quer zur Längsachse X zu dieser versetzt in dem Elektronikgehäuse 18 angeordnet werden kann. Dies hat den Vorteil, dass der Bereich, durch welchen sich die Schrauben 28 durch die Führungen 60 in dem Unterteil 20 in dem Elektronikgehäuse 18 erstrecken, frei bleibt, sodass die Befestigung des Elektronikgehäuses 18 an dem Statorgehäuse 8 nicht durch die Leiterplatte 40 in dem Inneren gestört wird. Gegenüber eingegossenen Leitern in dem Elektronikgehäuse hat das Stator-Anschlusselement 48 den Vorteil, dass der Fertigungsvorgang zur Fertigung des Unterteils 20 vereinfacht wird, da keine Leiterbahnen eingegossen werden müssen. Gegenüber einer Kabelverbindung hat das Stator-Anschlusselement 48 den Vorteil, dass es formstabil ist und so definiert in dem Unterteil 20 positioniert wird, sodass ein versehentliches Einklemmen und Beschädigen von Kabeln nicht auftreten kann.

Die zweite Steckkupplung 44 der Leiterplatte 40 ist mit einem zweiten Anschlusselement, welches an Netz-Anschlusselement 62 ausgebildet ist, verbunden. Das Netz-Anschlusselement 62 dient dem Anschluss eines externen Bauteils in Form einer Netz-Anschlussleitung. Während das Stator-Anschlusselement 48 im Inneren des Elektronikgehäuses 18 angeordnet ist und sich lediglich mit seinem zweiten Steckverbinder 54 aus dem Elektronikgehäuse 18 nach außen erstreckt, ist das Netz-Anschlusselement 62 an der Außenseite des Elektronikgehäuses 18 bzw. dessen Unterteils 20 angeordnet. Das Netz-Anschlusselement 62 ist in einer Einbuchtung 64 angeordnet, welche im Boden 24 des Unterteils 20 ausgebildet ist. Die Einbuchtung 64 ist in das Innere des Unterteils 20 gerichtet, d. h. im Bereich der Einbuchtung 64 ist der Boden 24 in axialer Richtung X näher zum Deckel 22 gelegen als der Boden 24 direkt oberhalb des Stators 8. Die Einbuchtung 64 schafft so an der Außenseite des Unterteils 20 einen Aufnahmeraum, in welchem das Netz-Anschlusselement 62 so aufgenommen ist, sodass es nicht über die von der Umfangs- bzw. Außenwandung 26 definierte Gesamt-Außenkontur des Elektronikgehäuses 18 vorsteht. Insbesondere steht das Netz-Anschlusselement 62 nicht in axialer Richtung X über diese Außenkontur vor.

Das Netz-Anschlusselement 62 ist als Formteil aus Kunststoff mit elektrischen Leiterbahnen ausgebildet, welche in das Kunststoffmaterial eingegossen sind. Die elektrischen Leiterbahnen bilden einen ersten Steckverbinder 66, welcher elektrisch leitend mit der zweiten Steckkupplung 44 an der Leiterplatte 40 in Eingriff tritt. In diesem Beispiel sind der erste Steckverbinder66 und die zweite Steckkupplung 44 dreipolig ausgebildet. So sind zwei Netzleiter und ein Erdungsleiter vorhanden. Über die Leiterbahnen im Inneren des Netz-Anschlusselementes 62 ist mit dem ersten Steckverbinder 66 ein zweiter Steckverbinder 68 verbunden, welcher als Steckkupplung zum Anschluss einer hier nicht gezeigten NetzAnschlussleitung ausgebildet ist. Der erste Steckverbinder 66 erstreckt sich durch eine Öffnung 70 im Boden 24 des Unterteils 20 hindurch in das Innere des Unterteils 20 und damit des Elektronikgehäuses 18 hinein, um dort mit der zweiten Steckkupplung 44 der Leiterplatte 40 in Eingriff zu treten. Den ersten Steckverbinder 66 umgebend ist an dem Netz-Anschlusselement 62 eine Dichtung 72 angeordnet, welche dichtend mit der Außenseite des Bodens 24 zur Anlage kommt und so die Öffnung 70 nach außen abdichtet. Alternativ könnte diese Dichtung 72 auch am Boden 24 des Unterteils 20 ausgebildet sein.

Der zweite Steckverbinder 68 ist gegenüber dem ersten Steckkontakt 66 um 90° abgewinkelt ausgebildet, sodass der zweite Steckverbinder 68 sich zu der Umfangswandung 26 hin erstreckt bzw. durch eine Öffnung bzw. Ausnehmung 74 seitlich nach außen erstreckt. D. h. die Steckrichtungen des ersten Steckverbinders 66 und des zweiten Steckverbinders 68 sind in einem Winkel von 90° zueinander gerichtet. Die Ausnehmung 74 ist in einer Wand 75, welche die Einbuchtung 64 umgibt, gelegen. Diese Wand 75 stellt eine axiale Verlängerung der Außenwandung 26 dar und bildet somit einen Teil der Außenwandung 26, auch wenn sie nicht den Innenraum des Unterteils 20 bzw. des Elektronikgehäuses 18 umgibt. In dieser Wand 75 ist eine zweite Ausnehmung 76 an einer angrenzenden Seitenfläche der Einbuchtung 64 ausgebildet. Die Einbuchtung 64 ist an einer Ecke des Unterteils 20 gelegen, sodass die Ausnehmungen 74 und 76 an zwei sich im Wesentlichen im Winkel von 90° zu einander erstreckenden Wänden bzw. Wandabschnitten gelegen sind. Wenn das Netz-Anschlusselement 62 in der Einbuchtung 64 gelegen ist, liegt eine Außenfläche 78 in der Ausnehmung 76 und verschließt diese so, dass sich die Außenfläche 78 des Netz-Anschlusselementes 62 harmonisch bzw. bündig in die Wand 75 bzw. Außenseite der Umfangswandung 26 einfügt. Das Netz-Anschlusselement 62 ist vorzugsweise einstückig aus Kunststoff ausgebildet. Dabei weist der Kunststoff bevorzugt eine Farbe auf, welche sich von der Farbe der umgebenden Außenwandung 26 und damit des gesamten Unterteils 20 unterscheidet. Dies kann von Vorteil sein, um auf der Außenfläche 78 eine von außen sichtbare Beschriftung, wie beispielsweise einen QR-Code anzubringen, welcher auf der Farbe der Außenwandung 26 schlecht lesbar wäre. So kann auf ein zusätzlich anzubringendes Schriftfeld verzichtet werden. Dieses wird vielmehr durch die Außenfläche 78 bereitgestellt.

In der Einbuchtung 64 wird das Netz-Anschlusselement 62 durch eine Schraube 80, welche sich von innen her durch den Boden 24 des Unterteils 30 erstreckt, fixiert. D. h. das Netz-Anschlusselement 62 kann von der Außenseite her nicht gelöst werden. Somit ist sichergestellt, dass in diesem Bereich das Elektronikgehäuse 18 sicher verschlossen bleibt. Dadurch, dass das Netz-Anschlusselement 62 in der Einbuchtung 64, welche in dem auskragenden Abschnitt 32 an einer Ecke gelegen ist, angeordnet ist, ist der sich zur Seite hin erstreckende zweite Steckverbinder 68 für den Anschluss der Netz-Anschlussleitung 62 gut zugänglich. Dabei ist der zweite Steckverbinder 68 parallel zu einem Saugstutzen 82 gerichtet, welcher sich bei bevorzugter Einbaulage des Pumpenaggregates nach unten erstreckt.

Die Verwendung des Netz-Anschlusselementes hat den Vorteil, dass eine Netz-Anschlussleitung nicht direkt mit der Leiterplatte 40 bzw. den dort angeordneten elektrischen Leitern verbunden werden muss. So ist es zum Anschluss der Netz-Anschlussleitung nicht erforderlich, das Elektronikgehäuse 18 zu öffnen, wodurch eine versehentliche Beschädigung elektrischer bzw. elektronischer Bauteile im Inneren beim Anschluss einer Netz-Anschlussleitung verhindert werden kann. Die Anordnung des Netz-Anschlusselementes 62 an der Außenseite hat darüber hinaus den Vorteil, dass die Öffnung 70 im Boden 24 gut von der Außenseite her abgedichtet werden kann, sodass ein Eindringen von Feuchtigkeit in diesem Bereich verhindert wird. Ferner könnte das Netz-Anschlusselement 62 eine Adapterfunktion übernehmen, bei welcher unterschiedliche zweite Steckverbinder 68 vorgesehen werden, um unterschiedlich geformte Gegenstücke von Netz-Anschlussleitungen hier anschließen zu können. So lässt sich eine Anpassung des Elektronikgehäuses 18 an verschiedene Anschlussleitungen realisieren, ohne die wesentlichen Bauteile wie die Leiterplatte 40 ändern zu müssen. Darüber hinaus kann auch im Bereich des Netzanschlusses auf in dem Unterteil 20 und damit dem Elektronikgehäuse 18 angeordnete Leiterbahnen verzichtet werden.

In dem Unterteil 20 ist ferner ein Wärmeverteiler 84 angeordnet, welcher der Kühlung von Wärme erzeugenden elektronischen Bauelementen an der Leiterplatte 40 dient. Ein solches elektronisches Bauelement 86 kann beispielsweise der Leistungsschalter eines Frequenzumrichters sein. Bei der hier gewählten Anordnung ist das zu kühlende elektronische Bauelement 86 an der dem Boden 24 zugewandten Seite der Leiterplatte 40 gelegen. Das zu kühlende Bauelement 86 ist an der Anlagefläche 88 an dem Wärmeverteiler 84 in wärmeleitende Anlage. Die Anlagefläche 88 erstreckt sich im Wesentlichen parallel zum Boden 24 und zu der Leiterplatte 40, d. h. normal zu der Längs- bzw. Drehachse X. Der Wärmeverteiler 84 ist als Gussbauteil aus Metall, beispielsweise Aluminium ausgebildet und weist an seiner der Anlagefläche 88 abgewandten Axialseite eine Rippenstruktur 90 auf. Der Wärmeverteiler 84 ist im Inneren des Elektronikgehäuses 18 bzw. dessen Unterteils 20 so angeordnet, dass er sich durch eine Ausnehmung bzw. Öffnung 92 im Boden 24 des Elektronikgehäuses 18 derart nach außen erstreckt, dass die Rippenstruktur 90 an der Außenseite des Unterteils 20 gelegen ist, während die Anlagefläche 88 im Inneren gelegen ist. Am Umfangsbereich der Öffnung 92 ist eine Dichtung 94 angeordnet, welche dichtend mit einer korrespondierenden Anlagefläche an dem Wärmeverteiler 84 zur Anlage kommt, sodass der Wärmeverteiler 84 die Öffnung 92 dicht verschließt. Die Dichtung 94 ist zweckmäßigerweise im Zweikomponentenspritzguss direkt an das Unterteil 20 angegossen. So kann die Dichtung 94 gleichzeitig mit weiteren Dichtungen 96 und 98 gegossen werden, welche zur Abdichtung des Deckels 22 sowie des Bodens 24 gegenüber dem Axialende des Statorgehäuses 8 dienen.

In dem Bereich der Öffnung 92 weist der Boden 24 es Unterteils 20 eine Stufe 100 auf. Die Stufe 100 springt in das Innere des Elektronikgehäuses 18 vor. So bildet die Stufe 100 eine nach innen gerichtete Einbuchtung und bewirkt, dass die Öffnung 92 in axialer Richtung näher zu der Leiterplatte 40 gelegen ist als der übrige Bereich des Bodens 24. So kann die Öffnung 92 und damit die Anlagefläche 88 des in die Öffnung eingesetzten Wärmeverteilers 64 in die Nähe der Leiterplatte 40 gebracht werden, um dort mit dem zu kühlenden elektronischen Bauelement 86 direkt in Kontakt gebracht zu werden. Gleichzeitig wird außenseitig der Öffnung 92, d. h. an der dem Statorgehäuse 8 zugewandt Außen- bzw. Unterseite des Unterteils 20 im Bereich der Stufe 100 eine Einbuchtung bzw. ein Aufnahmeraum geschaffen, in welchem der äußere Teil des Wärmeverteilers, nämlich die Rippenstruktur 90 Platz findet. So wird erreicht, dass die Rippenstruktur 90 zwar außerhalb des Elektronikgehäuses 18 liegt jedoch innerhalb der von der Außenwandung 26 definierten Außenkontur des Elektronikgehäuses. Insbesondere steht die Rippenstruktur 90 in axialer Richtung nicht über den an das Statorgehäuse 8 angrenzenden Boden 24 des Elektronikgehäuses 18 vor. Die Rippenstruktur 90 liegt dabei ferner seitlich bzw. radialseitig des Außenumfanges des Statorgehäuses 8 in dem auskragenden Abschnitt 32, sodass sie an der Unterseite des Elektronikgehäuses 18, welche dem Statorgehäuse 8 zugewandt ist, frei von Luft überströmt werden kann. Die Öffnung 92, durch welche sich der Wärmeverteiler 84 mit seiner Rippenstruktur 90 nach außen erstreckt, liegt somit in einem Bereich, welcher dem Statorgehäuse nicht zugewandt ist. Zwar ist der Boden 24 grundsätzlich dem Axialende des Statorgehäuses 8 zugewandt, jedoch ist der Boden in dem auskragenden Abschnitt 32 dem Statorgehäuse 8 nicht zugewandt, sondern einem Bereich radialseitig des Statorgehäuses, d. h. außerhalb des Statorgehäuses, zugewandt. So liegt die Öffnung 92 mit dem Wärmeverteiler 84 in einem dem Statorgehäuse 8 abgewandten Bereich des Elektronikgehäuses 18. Die Kühlung der Rippenstruktur 90 über die Umgebungsluft wird ferner dadurch begünstigt, dass die Rippenstruktur 90 nicht durch Gehäuseteile überdeckt ist. Gleichzeitig wird die Oberseite des Elektronikgehäuses 18, d. h. des Deckels 22, an welcher das Bedienfeld 30 gelegen ist, frei von wärmeabführenden Bauelementen gehalten. So ist der Wärmeverteiler 84 von der Bedienseite her im Wesentlichen nicht sichtbar, sodass er den optischen Eindruck des Elektronikgehäuses 18 nicht stört.

Der Wärmeverteiler 84 ist im Unterteil 20 über zwei Schrauben 102 befestigt. Ferner ist der Wärmeverteiler 88 mit einem Erdungsanschluss einer Erdungsverbindung in dem Stator-Anschlusselement 48 verbunden. Die Erdungsverbindung in dem Stator-Anschlusselement 48 ist ebenfalls als eine eingegossene Leiterbahn 56 ausgebildet, welche an einem ösen- bzw. ringförmigen Erdungsanschluss 104 endet. Der ringförmige Erdungsanschluss 104 kommt bei Montage des Stator-Anschlusselementes 48 über einem Gewindeloch 106 in den Wärmeverteiler 84 zu liegen. Dem Gewindeloch 106 abgewandt, kommt über dem ringförmigen Erdungsanschluss 104 ein Erdungskontakt 108 der Leiterplatte 40 zu liegen. Der Erdungskontakt ist durch eine ein Loch umgebende Leiterbahn gebildet und an einem zungenförmigen Abschnitt 110 gelegen. Der zungenförmige Abschnitt 110 ist in der Leiterplatte durch Schnitte ausgebildet. Durch das Loch des Erdungskontaktes 108 an dem zungenförmigen Abschnitt 110 und durch den Erdungsanschluss 104 erstreckt sich in das Gewindeloch 106 hinein eine Schraube 112. So wird eine Erdungsverbindung zwischen einem an der Leiterplatte 40 ausgebildeten Erdungsleiter gleichzeitig mit dem Erdungsanschluss 104 des Stator-Anschlusselementes 48 und dem Wärmeverteiler 84 hergestellt. Der an der Leiterplatte 40 ausgebildete Erdungsleiter ist über die Stecckupplung 44 mit einem entsprechenden Erdungskontakt des Steckverbinders 66 des Netz-Anschlusselementes 62 und über dieses mit dem Erdungsleiter einer Netz-Anschlussleitung verbunden.

Die Anordnung des Erdungskontaktes 108 auf dem zungenförmigen Abschnitt 110 hat den Vorteil, dass damit der Erdungskontakt 108 gemeinsam mit dem zungenförmigen Abschnitt 110 gegenüber den übrigen Teilen der Leiterplatte 40 bewegbar ist. So wird verhindert, dass durch die Verbindung des Erdungskontaktes 108 mit dem Wärmeverteiler 84 und dem Stator-Anschlusselement 48 Spannungen in die Leiterplatte 40 eingebracht werden, welche beispielsweise zum Reißen von Leiterbahnen an der Leiterplatte 40 führen könnten.

Ferner ist bei dieser Ausgestaltung der Kontakt zwischen dem Wärmeverteiler 84 und dem Erdungsanschluss 104 an dem Stator-Anschlusselement 48 so dimensioniert, dass neben einer elektrisch leitenden Verbindung auch eine Wärme leitende Verbindung geschaffen wird. Dazu kann die Anlagefläche zwischen Wärmeverteiler 84 und Erdungsanschluss 104 größer ausgebildet sein als für den elektrischen Kontakt erforderlich. Dadurch wird erreicht, dass der Wärmeverteiler den Erdungsanschluss 104 und die sich daran anschließende Leiterbahn im Inneren des Stator-Anschlusselementes 48 erwärmen kann. Dies hat den Vorteil, dass die Leiterbahn und der Erdungsanschluss 104 im inneren des Elektronikgehäuses 18 sich nicht über einen Kontakt mit dem Statorgehäuse 8, wie er nachfolgen beschrieben wird, abkühlen können, was zu einer Kondensation von Feuchtigkeit im Elektronikgehäuse 18 führen könnte. Eine solche Abkühlung wäre beispielsweise zu befürchten, wenn das Pumpenaggregat als Kaltwasserpumpe eingesetzt wird, bei welcher es in einer Abkühlung des Statorgehäuses 8 kommt.

Über zwei Schrauben 114 ist ferner das elektronische Bauelement 86 an der Anlagefläche 88 des Wärmeverteilers 84 fixiert.

Das Stator-Anschlusselement 48 weist an seiner Erdungsverbindung darüber hinaus einen weiteren Erdungsanschluss 116 auf. Dieser kommt über einer Öffnung 118 im Boden 24 des Unterteils 20 zu liegen. Durch die Öffnung 118 hindurch kann sich ein Stift 120, welcher am Axialende des Statorgehäuses 8 angeordnet ist, in das Innere des Elektronikgehäuses 18 hinein erstrecken und in den Erdungsanschluss 116 eingreifen. Der Stift 120 ist an der Axialseite des Statorgehäuses 8 mit diesem elektrisch leitend verbunden und steht in axialer Richtung X vor. In dem Erdungsanschluss 116 sind Federbleche bzw. Federzungen ausgebildet, welche schneidend und elektrisch leitend mit dem Außenumfang des Stiftes 120 in Eingriff treten. So wird eine Erdungsverbindung zwischen dem metallischen Statorgehäuse 8 und der Erdungsverbindung in dem Stator-Anschlusselement 48 hergestellt. Über das Stator-Anschlusselement 48 und dessen zweiten Erdungsanschluss 104 erfolgt die Erdung dann über die Erdungsleitung an der Leiterplatte 40 und wie beschrieben das Netz-Anschlusselement 62.

Die beschriebene Stufe 100 im Boden 24 des Unterteils 20 ist in dem auskragenden Abschnitt 32 angrenzend zu dem Mittelbereich 121 des Unterteils 20, welches an das Axialende des Statorgehäuses 8 angesetzt ist, gelegen und streifenförmig in tangentialer Richtung ausgebildet. D. h. an dem radial äußeren Abschnitt ist ein Bereich 24a des Bodens 24 ausgebildet, welcher über der Stufe 100 wieder in axialer Richtung zu dem Statorgehäuse 8 hin vorspringt und auf demselben axialen Niveau wie der übrige Bereich des Bodens 24 außerhalb des Stufe 10 gelegen ist. So wird an die Stufe 100 angrenzend im Innenraum des Unterteils 20 ein Aufnahmeraum 122 geschaffen, welcher eine größere axiale Bauhöhe hat. D. h. im Bereich des Aufnahmeraums 122 ist die axiale Höhe zwischen der Leiterplatte 40 und dem Boden 24, 24a größer als zwischen der Leiterplatte 40 und der Stufe 100 im Inneren des Elektronikgehäuses 18. So können in den Aufnahmeraum 122 diejenigen elektronischen Bauteile 124 hineinragen, welche eine größere axiale Bauhöhe aufweisen. Durch die Ausbildung der Stufe 100 im Boden 24 des Elektronikgehäuses 18 mit dem seitlich der Stufe gelegenen Aufnahmeraum 122 kann somit zum einen erreicht werden, dass das wärmeabgebende zu kühlende elektronische Bauelement 86 in axialer Richtung in der Nähe der Öffnung 92, durch welche sich der Wärmeverteiler 84 nach außen erstreckt, angeordnet werden kann, gleichzeitig seitlich aber über der Leiterplatte 40 in dem Aufnahmeraum 22 ein größerer axialer Freiraum zur Aufnahme höherer elektronischer Bauelemente 124 gegeben ist. Dies ermöglicht es, alle elektronischen Bauelemente auf einer planen Leiterplatte 40 anzuordnen und darüber hinaus ein flaches, in seiner Gesamtkontur im Wesentlichen scheibenförmiges Elektronikgehäuse 18 auszubilden, über welches keine Bauteile, wie ein Wärmeverteiler 84 in axialer Richtung vorstehen. Die Einbuchtung 64, in welcher das Netz-Anschlusselement 62 gelegen ist, ist wie der Aufnahmeraum 122 an der der Längsachse X abgewandten Seite der Stufe 100 gelegen. Die Einbuchtung 64 ist dabei mit dem durch die Stufe 100 an der Außenseite des Bodens 24 gebildeten Freiraum, in welchem die Rippenstruktur 90 gelegen ist, verbunden.

### Bezugszeichenliste

- 2: Pumpengehäuse
- 4: Laufrad
- 6: Isolationselement
- 8: Statorgehäuse
- 10: Stator
- 12: Rotor
- 14: Rotorwelle
- 16: Spaltrohr
- 18: Elektronikgehäuse
- 20: Unterteil
- 22: Deckel
- 24, 24a: Boden
- 26: Außenwandung
- 28: Schrauben
- 30: Bedienfeld
- 32: auskragender Abschnitt
- 34: Schrauben
- 36: Durchbrechungen
- 38: Löcher
- 40: Leiterplatte
- 42: erste Steckkupplung
- 44: zweite Steckkupplung
- 46: Schrauben
- 48: Stator-Anschlusselement
- 50: Schraube
- 52: erster Steckverbinder
- 54: zweiter Steckverbinder
- 55: Öffnung
- 56: Leiterbahnen
- 58: Öffnung
- 60: Führungen
- 62: Netz-Anschlusselement
- 64: Einbuchtung
- 66: erster Steckverbinder
- 68: zweiter Steckverbinder
- 70: Öffnung
- 72: Dichtung
- 74,76: Ausnehmungen
- 75: Wand
- 78: Außenfläche
- 80: Schraube
- 82: Saugstutzen
- 84: Wärmeverteiler
- 86: elektronisches Bauelement
- 88: Anlagefläche
- 90: Rippenstruktur
- 92: Öffnung
- 94: Dichtung
- 96,98: Dichtung
- 100: Stufe
- 102: Schrauben
- 104: Erdungsanschluss
- 106: Gewindeloch
- 108: Erdungskontakt
- 110: Abschnitt
- 112: Schraube
- 114: Schrauben
- 116: Erdungsanschluss
- 118: Öffnung
- 120: Stift
- 121: Mittelbereich
- 122: Aufnahmeraum
- 124: elektronische Bauteile

- X: Längsachse

## Patentansprüche

1. Pumpenaggregat mit einem in einem Statorgehäuse (8) angeordneten elektrischen Antriebsmotor und einem mit dem Statorgehäuse (8) verbundenen Elektronikgehäuse (18), in welchem zumindest eine Leiterplatte (40) mit den zur Steuerung bzw. Regelung des Antriebsmotors erforderlichen elektronischen Bauteilen angeordnet ist wobei an oder in dem Elektronikgehäuse (18) zumindest ein separates, als Kunststoffformteil ausgebildetes Anschlusselement (62) angeordnet ist, welches als ein Netz-Anschlusselement (62) ausgebildet ist und das einen ersten elektrischen Steckverbinder (66), wel-cher mit einer korrespondierenden elektrischen Steckkupplung (44) an der Leiterplatte (40) verbunden ist, sowie einen zweiten elektrischen Steckverbinder (68) aufweist, welcher mit dem ersten elektrischen Steckverbinder (66) über Leiterbahnen (56) verbunden ist und zum Anschluss einer Netzanschlussleitung vorgesehen ist, und der Innenraum des Elektronikgehäuses (18) durch eine Wandung (24) begrenzt ist, in welcher eine Öffnung (70) ausgebildet ist, **gekennzeichnet dadurch, dass** sich das Anschlusselement (62) mit seinem ersten Steckverbinder (66) durch die Öffnung (70) in den Innenraum hinein erstreckt und der zweite Steckverbinder (68) außerhalb des Innenraumes angeordnet ist und dadurch, dass das Elektronikgehäuse (18) als Formteil aus Kunststoff zweiteilig mit einem Unterteil (20) und einem auf das Unterteil aufgesetzten Deckel (22) ausgebildet ist.

2. Pumpenaggregat nach Anspruch 1, **dadurch gekennzeichnet, dass** das Anschlusselement (62) außerhalb des Innenraumes des Elektronikgehäuses (18) angeordnet ist.

3. Pumpenaggregat nach Anspruch 1 oder 2, **gekennzeichnet durch** eine Dichtung (72), welche an der die Öffnung (70) umgebenden Wandung (24) sowie an dem Anschlusselement (62) dichtend anliegt und vorzugsweise an die Wandung (24) oder das Anschlusselement (62) angegossen ist.

4. Pumpenaggregat nach einem der vorangehenden Ansprüche, **dadurch gekennzeichnet, dass** der erste (66) und der zweite Steckverbinder (68) gewinkelt zueinander, vorzugsweise in einem Winkel von 90° zueinander angeordnet sind.

5. Pumpenaggregat nach Anspruch 4, **dadurch gekennzeichnet, dass** sich die Leiterplatte (40) im Innenraum des Elektronikgehäuses (18) parallel zu einem Boden (24) des Elektronikgehäuses (18) erstreckt und der zweite Steckverbinder (68) zu einer sich quer zum Boden (24) erstreckenden Seitenwandung (26) des Elektronikgehäuses hin gerichtet ist.

6. Pumpenaggregat nach einem der vorangehenden Ansprüche, **dadurch gekennzeichnet, dass** das Anschlusselement (62) an einer Ecke des Elektronikgehäuses (18) angeordnet ist.

7. Pumpenaggregat nach einem der vorangehenden Ansprüche, **dadurch gekennzeichnet, dass** das Elektronikgehäuse (18) an seiner Wandung (24) eine nach innen in den Innenraum hinein gerichtete Einbuchtung (64) aufweist, in der das Anschlusselement (62) angeordnet ist.

8. Pumpenaggregat nach Anspruch 10, **dadurch gekennzeichnet, dass** die Einbuchtung (64) an zumindest einer, der den Innenraum begrenzenden Wandung abgewandten Seite von einer Wand begrenzt ist, wobei die Wand vorzugsweise eine Verlängerung einer Außenwandung (26) des Elektronikgehäuses (18) bildet.

9. Pumpenaggregat nach einem der vorangehenden Ansprüche, **dadurch gekennzeichnet, dass** das Anschlusselement (62) zumindest eine Außenfläche (78) aufweist, welche sich in eine Außenwandung (26) des Elektronikgehäuses (18) flächig einfügt oder an eine Außenwandung (26) des Elektronikgehäuses (18) flächig anschließt, wobei vorzugsweise das Anschlusselement (62) eine Farbe aufweist, welche von der Farbe der Außenwandung (26) verschieden ist.

10. Pumpenaggregat nach Anspruch 9, **dadurch gekennzeichnet, dass** in der Wand, welche die Einbuchtung begrenzt eine Öffnung ausgebildet ist, in welcher die Außenfläche des Anschlusselementes gelegen ist.

11. Pumpenaggregat nach einem der vorangehenden Ansprüche,
**dadurch gekennzeichnet, dass** das Anschlusselement (62) mit
dem Elektronikgehäuse (18) über eine Rast- und/oder Schraubverbindung verbunden ist.

12. Pumpenaggregat nach einem der vorangehenden Ansprüche, **dadurch gekennzeichnet, dass** an oder in dem Elektronikgehäuse (18) ein separates, als Kunststoffformteil ausgebildetes Stator-Anschlusselement (48) angeordnet ist, welches vorzugsweise mit einem ersten elektrischen Steckverbinder (52) elektrisch leitend mit der Leiterplatte (40) verbunden ist, und einen zweiten elektrischen Steckverbinder (54) aufweist, welcher mit einem elektrischen Anschlussstecker eines Stators (10) des elektrischen Antriebsmotors verbunden ist.

13. Pumpenaggregat nach Anspruch 12, **dadurch gekennzeichnet,**
**dass** der erste elektrische Steckverbinder (52) des Stator-Anschlusselements (48) entgegengesetzt zu dem zweiten elektrischen Steckverbinder (54) des Stator-Anschlusselements (48) gerichtet ist.

14. Pumpenaggregat nach Anspruch 12 oder 13, **dadurch gekennzeichnet, dass** der erste Steckverbinder (52) und der zweite Steckverbinder (54) des Stator-Anschlusselements (48) in einer Richtung quer zu ihren Steckrichtungen versetzt zueinander angeordnet sind, während die Steckrichtungen vorzugsweise parallel zueinander gerichtet sind.

15. Pumpenaggregat nach einem der Ansprüche 12 bis 14, **dadurch gekennzeichnet, dass** das Stator-Anschlusselement (48) im Inneren des Elektronikgehäuses (18) angeordnet ist, wobei sich vorzugsweise der zweite Steckverbinder (54) durch eine Öffnung (58) in einem Boden (24) des Elektronikgehäuses (18) hindurch zu dem Stator erstreckt.

16. Pumpenaggregat nach einem der vorangehenden Ansprüche, **dadurch gekennzeichnet, dass** das Elektronikgehäuse (18) am Axialende eines Statorgehäuses (8) des elektrischen Antriebsmotors angeordnet ist, wobei das Elektronikgehäuse (18) einen radial über den Außenumfang des Statorgehäuses (8) auskragenden Abschnitt (32) aufweist, an welchem das Anschlusselement (62) angeordnet ist.

## Claims

1. A pump assembly with an electrical drive motor which is arranged in a stator housing (8) and with an electronics housing (18) which is connected to the stator housing (8) and in which at least one circuit board (40) with electronic components is arranged, said components being necessary for the control or closed-loop control of the drive motor, wherein at least one separate connection element (62) which is designed a plastic moulded part is arranged on or in the electronics housing (18), said connection element being designed as a main connection element (62) and comprising the one first electrical plug connector (66) which is connected to a corresponding electrical plug-in coupling (44) on the circuit board (40), as well as comprising a second electrical plug connector (68) which is connected to the first electrical plug connector (66) via strip conductors (56) and which is provided for the connection of a mains connection lead and the interior of the electronics housing (18) is delimited by a wall (24), in which an opening (70) is formed,
**characterised in that** the connection element (62) with its first plug connector (68) extends through the opening (70) into the interior and the second plug connector (68) is arranged outside the interior and **in that** the electronics housing (18) is designed as a moulded part of plastic in a two-part manner with a lower part (20) and with a cover (22) which is placed upon the lower part.

2. A pump assembly according to claim 1, **characterised in that** the connection element (62) is arranged outside the interior of the electronics housing (18).

3. A pump assembly according to claim 1 or 2, **characterised by** a seal (72) which sealingly bears on the wall (24) surrounding the opening (70) as well as on the connection element (62) and which is preferably moulded onto the wall (24) or onto the connection element (62).

4. A pump assembly according to one of the preceding claims, **characterised in that** the first (66) and the second plug connector (68) are arranged angled to one another, preferably at an angle of 90° to one another.

5. A pump assembly according to claim 4, **characterised in that** the circuit board (40) in the interior of the electronics housing (18) extends parallel to a base (24) of the electronics housing (18), and the second plug connector (68) is directed to a side wall (26) of the electronics housing which extends transversely to the base (24).

6. A pump assembly according to one of the preceding claims, **characterised in that** the connection element (62) is arranged at a corner of the electronics housing (18).

7. A pump assembly according to one of the preceding claims, **characterised in that** the electronics housing (18) on its wall (24) comprises an indentation (64) which is directed inwardly into the interior and in which the connection element (62) is arranged.

8. A pump assembly according to claim 10, **characterised in that** the indentation (64) at at least one side, which is away from the wall, delimiting the interior is delimited by a wall, wherein the lastmentioned wall preferably forms an extension of an outer wall (26) of the electronics housing (18).

9. A pump assembly according to one of the preceding claims, **characterised in that** the connection element (62) comprises at least one outer surface (78) which merges into an outer wall (26) of the electronics housing (18) in a surfaced manner or connects in a surfaced manner to an outer wall (26) of the electronics housing (18), wherein preferably the connection element (62) has a colour which is different from the colour of the outer wall (26).

10. A pump assembly according to claim 9, **characterised in that** an opening, in which the outer surface of the connection element is situated, is formed in the wall delimiting the indentation.

11. A pump assembly according to one of the preceding claims, **characterised in that** the connection element (62) is connected to the electronics housing (18) via a lock-in and/or screw connection.

12. A pump assembly according to one of the preceding claims, **characterised in that** a separate stator connection element (48) which is formed as a plastic moulded part is arranged on or in the electronics housing (18), said connection element preferably with a first electrical plug connector (52) being electrically conductively connected to the circuit board (40) and comprising a second electrical plug connector (54) which is connected to an electrical connection plug of a stator (10) of the electrical drive motor.

13. A pump assembly according to claim 12, **characterised in that** the first electrical plug connector (52) of the stator connection element (48) is directed opposite to the second electrical plug connector (54) of the stator connection element (48).

14. A pump assembly according to claim 12 or 13, **characterised in that** the first plug connector (52) and the second plug connector (54) of the stator connection element (48) are arranged offset to one another in a direction transverse to their plug-in directions, whilst the plug-in directions are preferably directed parallel to one another.

15. A pump assembly according to one of the claims 12 to 14, **characterised in that** the stator connection element (48) is arranged in the inside of the electronics housing (18), wherein preferably the second plug connector (54) extends through an opening (58) in a base (24) of the electronics housing (18), to the stator.

16. A pump assembly according to one of the preceding claims, **characterised in that** the electronics housing (18) is arranged on the axial end of a stator housing (8) of the electrical drive motor, wherein the electronics housing (18) comprises a section (32) which projects radially beyond the outer periphery of the stator housing (8) and on which the connection element (62) is arranged.

## Revendications

1. Groupe motopompe pourvu d'un moteur d'entraînement électrique disposé dans un carter de stator (8) et d'un boîtier électronique (18) relié au carter de stator (8) et dans lequel est disposée au moins une carte de circuits imprimés (40) dotée des composants électroniques nécessaires à la commande ou à la régulation du moteur d'entraînement,
dans lequel
au moins un élément de raccordement (62) séparé, conçu sous forme de pièce moulée en matière plastique, est disposé sur ou dans le boîtier électronique (18) et est réalisé en tant qu'élément de raccordement secteur (62), et présente un premier connecteur électrique (66), lequel est relié à une connexion à fiches électrique (44) correspondante sur la carte de circuits imprimés (40), ainsi qu'un second connecteur électrique (68) qui est relié au premier connecteur électrique (66) par l'intermédiaire de pistes conductrices (56) et est prévu pour le raccordement d'un conduit de raccordement secteur,
et l'espace intérieur du boîtier électronique (18) est délimité par une cloison (24) dans laquelle est pratiquée une ouverture (70), **caractérisé en ce que**
l'élément de raccordement (62) s'étend par son premier connecteur (66) à travers l'ouverture (70) jusque dans l'espace intérieur et le second connecteur (68) est disposé à l'extérieur de l'espace intérieur, et
**en ce que** le boîtier électronique (18) est réalisé sous forme de pièce moulée en matière plastique en deux parties, à savoir une partie inférieure (20) et un couvercle (22) posé sur la partie inférieure.

2. Groupe motopompe selon la revendication 1, **caractérisé en ce que** l'élément de raccordement (62) est disposé à l'extérieur de l'espace intérieur du boîtier électronique (18).

3. Groupe motopompe selon la revendication 1 ou 2, **caractérisé par** une garniture d'étanchéité (72) qui s'applique de manière étanche sur la cloison (24) entourant l'ouverture (70) ainsi que sur l'élément de raccordement (62), et est de préférence moulée sur la paroi (24) ou sur l'élément de raccordement (62).

4. Groupe motopompe selon l'une des revendications précédentes, **caractérisé en ce que** le premier connecteur (66) et le second connecteur (68) sont disposés angulairement l'un par rapport à l'autre, de préférence en formant entre eux un angle de 90°.

5. Groupe motopompe selon la revendication 4, **caractérisé en ce que** la carte de circuits imprimés (40) s'étend dans l'espace intérieur du boîtier électronique (18) parallèlement à un fond (24) du boîtier électronique (18) et **en ce que** le second connecteur (68) est dirigé vers une paroi latérale (26) du boîtier électronique s'étendant transversalement au fond (24).

6. Groupe motopompe selon l'une des revendications précédentes, **caractérisé en ce que** l'élément de raccordement (62) est disposé au niveau d'un coin du boîtier électronique (18).

7. Groupe motopompe selon l'une des revendications précédentes, **caractérisé en ce que** le boîtier électronique (18) présente au niveau de sa paroi (24) une cavité (64) dirigée vers l'intérieur de l'espace intérieur, dans laquelle est disposé l'élément de raccordement (62).

8. Groupe motopompe selon la revendication 10, **caractérisé en ce que** la cavité (64), sur au moins une face opposée à la paroi délimitant l'espace intérieur, est délimitée par une paroi, la paroi formant de préférence une prolongation d'une paroi extérieure (26) du boîtier électronique (18).

9. Groupe motopompe selon l'une des revendications précédentes, **caractérisé en ce que** l'élément de raccordement (62) présente au moins une surface extérieure (78) qui s'insère à plat dans une paroi extérieure (26) du boîtier électronique (18) ou se raccorde à plat à une paroi extérieure (26) du boîtier électronique (18), l'élément de raccordement (62) ayant de préférence une couleur différente de la couleur de la paroi extérieure (26).

10. Groupe motopompe selon la revendication 9, **caractérisé en ce que**, dans la paroi délimitant la cavité, est formée une ouverture dans laquelle est située la surface extérieure de l'élément de raccordement.

11. Groupe motopompe selon l'une des revendications précédentes, **caractérisé en ce que** l'élément de raccordement (62) est relié au boîtier électronique (18) par l'intermédiaire d'une liaison par encliquetage et/ou d'un raccord vissé.

12. Groupe motopompe selon l'une des revendications précédentes, **caractérisé en ce qu'**est disposé, sur ou dans le boîtier électronique (18), un élément de raccordement de stator (48) séparé, réalisé sous forme de pièce moulée en matière plastique, qui est relié de manière électro-conductrice à la carte de circuits imprimés (40), de préférence par un premier connecteur électrique (52), et présente un second connecteur électrique (54) qui est relié à une fiche de raccordement électrique d'un stator (10) du moteur d'entraînement électrique.

13. Groupe motopompe selon la revendication 12, **caractérisé en ce que** le premier connecteur électrique (52) de l'élément de raccordement de stator (48) est dirigé à l'opposé du second connecteur électrique (54) de l'élément de raccordement de stator (48).

14. Groupe motopompe selon la revendication 12 ou 13, **caractérisé en ce que** le premier connecteur (52) et le second connecteur (54) de l'élément de raccordement de stator (48) sont disposés mutuellement décalés dans une direction transversale à leurs directions d'enfichage, tandis que les directions d'enfichage sont orientées de préférence de manière parallèle entre elles.

15. Groupe motopompe selon l'une des revendications 12 à 14, **caractérisé en ce que** l'élément de raccordement de stator (48) est disposé à l'intérieur du boîtier électronique (18), le second connecteur (54) s'étendant de préférence à travers une ouverture (58) pratiquée dans un fond (24) du boîtier électronique (18) vers le stator.

16. Groupe motopompe selon l'une des revendications précédentes, **caractérisé en ce que** le boîtier électronique (18) est disposé à l'extrémité axiale d'un carter de stator (8) du moteur d'entraînement électrique, le boîtier électronique (18) comportant une partie (32) faisant saillie radialement du pourtour extérieur du carter de stator (8), sur laquelle est disposé l'élément de raccordement (62).
